(19) Europäisches Patentamt / European Patent Office / Office européen des brevets

(11) **EP 1 331 716 B1**

(12) **FASCICULE DE BREVET EUROPEEN**

(45) Date de publication et mention
de la délivrance du brevet:
**19.05.2010 Bulletin 2010/20**

(51) Int Cl.:
*H02J 7/14* *(2006.01)*    *H02P 9/30* *(2006.01)*

(21) Numéro de dépôt: **03100019.3**

(22) Date de dépôt: **08.01.2003**

(54) **Système d'alimentation en énergie électrique d'un véhicule automobile**

Elektrisches Energieversorgungsystem eines Kraftfahrzeuges

Power supply system for a motor vehicle

(84) Etats contractants désignés:
**AT BE BG CH CY CZ DE DK EE ES FI FR GB GR HU IE IT LI LU MC NL PT SE SI SK TR**

(30) Priorité: **24.01.2002 FR 0200891**

(43) Date de publication de la demande:
**30.07.2003 Bulletin 2003/31**

(73) Titulaire: **Peugeot Citroën Automobiles SA
92200 Neuilly sur Seine (FR)**

(72) Inventeur: **Godefroy, Emmanuel
92100, Boulogne Billancourt (FR)**

(74) Mandataire: **Ménès, Catherine et al
Peugeot Citroën Automobiles SA
PI (LG081)
18, rue des Fauvelles
92250 La Garenne-Colombes (FR)**

(56) Documents cités:
**WO-A-00/13303       WO-A-00/45497
DE-A- 19 845 569    US-A- 3 668 514
US-A- 6 049 198**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention est relative à un système d'alimentation en énergie électrique d'un véhicule automobile.

L'alimentation en énergie électrique d'un véhicule automobile s'effectue à l'aide d'une batterie d'accumulateurs qui est chargée par un alternateur, en général entraîné par un moteur de traction du véhicule.

La plupart des véhicules automobiles disposent aujourd'hui d'une batterie délivrant une tension de 12 V et l'alternateur correspondant délivre une tension de 14 V. Etant donné qu'à bord des véhicules automobiles le nombre d'équipements consommateurs d'énergie électrique augmente, la puissance qui peut être délivrée par la batterie doit donc augmenter. En effet, il devient courant que chaque véhicule comporte un calculateur et des commandes électriques, notamment pour le réglage des sièges, l'assistance au freinage, les suspensions, etc.

La puissance d'une batterie de tension déterminée (12 V) est proportionnelle à l'intensité du courant qu'elle fournit. Mais une augmentation d'intensité entraîne une augmentation de la section des câbles d'alimentation, soit un surcoût non négligeable. C'est pourquoi, pour augmenter la puissance des sources d'énergie électrique à bord des véhicules automobiles il est envisagé d'utiliser des batteries d'accumulateurs de plus grande tension, soit 36 V. Ces batteries doivent être chargées par une tension de 42 V. La tension de 36 V est suffisamment élevée pour permettre une augmentation substantielle de puissance sans augmentation d'intensité et, en outre, elle est suffisamment basse pour ne pas compromettre la sécurité des usagers.

Mais dans le domaine de l'industrie automobile, où les équipements sont produits en grande série, il est difficilement envisageable, pour des raisons de coûts, de passer sans transition d'une norme à une autre. C'est pourquoi, au moins pendant une période transitoire relativement longue, il est probable qu'on continuera à utiliser des équipements alimentés en basse tension (12 V) tels que l'éclairage, le(s) calculateur(s) et des petits moteurs, et qu'on fera appel à la haute tension pour les équipements nécessitant plus de puissance, tels que le démarrage, le freinage, les suspensions, etc. En outre au cours de la période transitoire, pour les mêmes raisons de coûts, il serait préférable de pouvoir continuer à utiliser des alternateurs basse tension, notamment 14 V, pour pouvoir charger à la fois les batteries 12 V et 36 V. Il faut donc prévoir un montage tel que l'alternateur classique, délivrant une tension de 14 V, fournisse une tension de 42 V pour charger la batterie de 36 V.

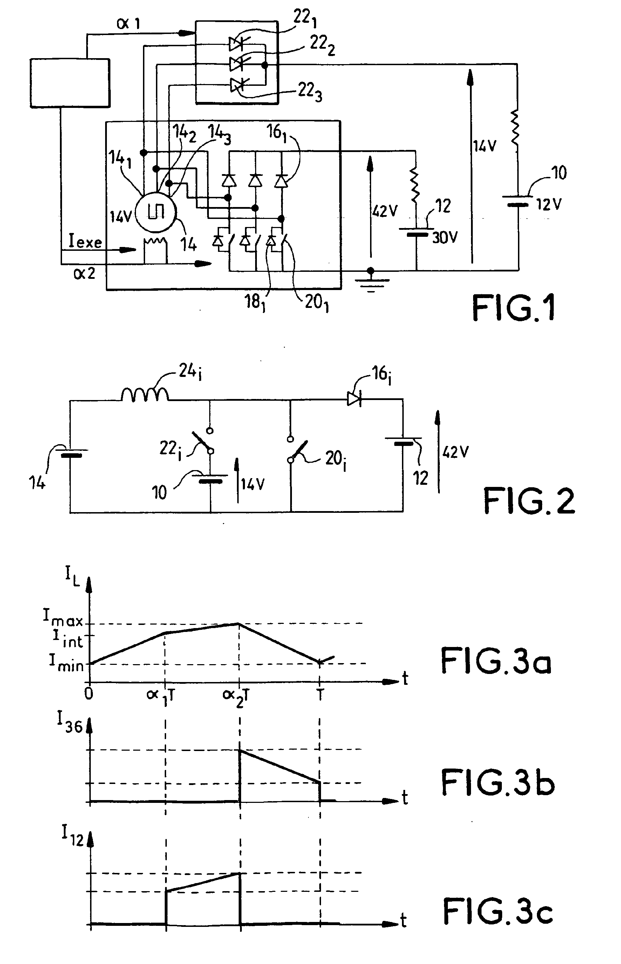

Dans le document US 6.239.996, il a déjà été proposé un système d'alimentation pour véhicule automobile permettant, à partir d'un alternateur délivrant une tension de 14 V, de charger une batterie de tension 12 V et une batterie de tension 36 V. Un tel montage est représenté sur la figure 1.

Dans ce montage connu on prévoit : une batterie 10 qui fournit une tension de 12 V, une batterie 12 fournissant une tension de 36 V, et, pour la charge de ces deux batteries, un alternateur triphasé 14 délivrant une tension de 14 V. L'alternateur est du type à griffes ou de "Lundell". Dans ce montage connu, pour appliquer une tension de 42 V aux bornes de la batterie 12, on prévoit un circuit d'augmentation de tension, ou "boost", qui prend avantage de la forte inductance interne de chaque phase de l'alternateur 14. A cet effet on raccorde chaque borne de phase $14_1$, $14_2$ et $14_3$ de l'alternateur 14 au point commun à l'anode d'une première diode $16_i$ et à la cathode d'une seconde diode $18_i$, la cathode la diode $16_i$ étant reliée au pôle "plus" de la batterie 12 et l'anode de la diode $18_i$ étant reliée au pôle "moins" (donc à la masse) de cette même batterie 12 délivrant une tension de 36 V. Un interrupteur commandé $20_i$ est installé en parallèle sur chacune des diodes $18_i$.

Par ailleurs chaque borne de phase $14_i$ est reliée au pôle plus de la batterie 10 de 12 V par intermédiaire d'un autre interrupteur commandé $22_i$.

Ainsi pour chaque phase de l'alternateur, on obtient le montage représenté sur la figure 2 : l'alternateur 14 alimente, d'une part, la batterie 10 (12 V) par l'intermédiaire de l'inductance $24_i$ de la phase i et de l'interrupteur commandé $22_i$ et, d'autre part, la batterie 12 (36 V) par l'intermédiaire d'une diode $16_i$. Un interrupteur $20_i$ est disposé entre, d'une part, le point commun à l'inductance $24_i$ et à l'anode de la diode $16_i$ et, d'autre part, la masse à laquelle sont connectés les pôles négatifs des batteries 10 et 12 ainsi qu'un pôle de l'alternateur 14.

Le fonctionnement est illustré par les diagrammes des figures 3a, 3b et 3c. Sur le diagramme de la figure 3a on a représenté en ordonnées l'intensité $I_L$ du courant dans l'inductance $24_i$ et, en abscisses, le temps t, tandis que sur les diagrammes des figures 3b et 3c on a représenté, également, en fonction du temps, l'intensité $I_{36}$ du courant de charge de la batterie 12 (figure 3b) et l'intensité $I_{12}$ du courant de charge de la batterie 10 de 12 V (figure 3c).

Au cours d'une première période de durée $\alpha_1 T$ (figure 3a), l'interrupteur $20_i$ est fermé. Dans ces conditions, l'alternateur 14 charge l'inductance $24_i$ et l'intensité $I_L$ atteint une valeur intermédiaire $I_{int}$ en partant d'une valeur minimale $I_{min}$. Au cours d'une seconde phase, l'interrupteur $20_i$ est ouvert et l'interrupteur $22_i$ est alors fermé. Dans ces conditions, la tension aux bornes de la batterie 10 est la somme de la tension de cette batterie et de la tension fournie par l'inductance $24_i$ qui continue sa charge dans la batterie 10.

Au bout du temps $\alpha_2 T$, l'interrupteur $22_i$ est ouvert. Dans ces conditions, la diode $16_i$ devient passante car la tension de son anode est supérieure à la tension de sa cathode et, ainsi, l'alternateur 14 alimente la batterie 12 de 36V par l'intermédiaire de l'inductance $24_i$ chargée. La batterie 12 est alimentée jusqu'au temps T pour lequel l'intensité $I_L$ atteint la valeur $I_{min}$ (figure 3a).

Dans le document WO0013303, la tension la plus élevée est régulée par l'intermédiaire du courant d'excitation de l'alternateur et la tension du réseau la plus faible est obtenue par découpage de la tension la plus élevée. Ainsi, de façon générale, le circuit n'utilise pas en permanence les inductances internes de l'alternateur pour augmenter la tension nominale afin qu'elle atteigne la tension de la seconde batterie.

Toutefois, il est vrai que dans le système montré dans ce document les inductances des enroulements peuvent être utilisées pour augmenter la tension fournie par l'alternateur quand son excitation est maximum afin qu'elle atteigne la tension de la seconde batterie (fonctionnement en mode "boost"). Mais cette situation intervient seulement lorsque le moteur tourne a faible vitesse, notamment au ralenti. Ainsi, W00013303 ne montre in ne suggère que la seconde batterie ait une tension sensiblement supérieure a la tension nominale de l'alternateur. Autrement dit, il ne montre ni ne suggère de faire appel en permanence, quelle que soit la vitesse de rotation du moteur, aux inductances des phases de l'alternateur pour permettre la charge d'une batterie de tension sensiblement supérieure a la tension nominale de l'alternateur. Dans ce document le fonctionnement de l'alternateur en mode "boost" se produit de manière exceptionnelle, uniquement lorsque le moteur tourne a faible allure.

En outre, dans ce circuit le circuit de charge de la seconde batterie n'est pas dépourvu d'interrupteur commandé. Au contraire, le circuit de charge de la deuxième batterie comporte des interrupteurs commandés connectés en parallèle des diodes.

L'invention part de la constatation que le montage représenté sur la figure 1 présente un double inconvénient. En premier lieu, ce montage est onéreux car il faut prévoir deux interrupteurs commandés par phase et la commande est complexe. En second lieu, au cours de chaque cycle de commande, il existe une période, de 0 à $\alpha_1 T$ qui est inutilisée pour la charge de l'une ou de l'autre des batteries.

L'invention remédie à ces inconvénients.

Elle concerne un système d'alimentation en énergie électrique d'un véhicule qui comporte un alternateur polyphasé délivrant une tension déterminée et qui est destiné à charger une batterie de tension inférieure à cette tension déterminée et une batterie de tension supérieure. Ce système comprend, pour chaque phase de l'alternateur, un interrupteur unidirectionnel commandé par l'intermédiaire duquel s'effectue l'alimentation de la batterie à tension inférieure et il est caractérisé en ce que l'alimentation de la batterie de tension supérieure à celle de l'alternateur est dépourvue d'interrupteur commandé et en ce que des moyens sont prévus pour commander chaque interrupteur de préférence à une fréquence sensiblement supérieure à la fréquence de l'alternateur, et de façon telle qu'au cours de chaque période de commande l'interrupteur soit fermé pendant une première fraction de période au cours de laquelle la batterie de tension inférieure se charge en même temps que se charge la phase correspondante de l'alternateur, et soit ouvert au cours d'une seconde période pendant laquelle la batterie de tension supérieure se charge.

Avec ce montage il suffit d'un seul interrupteur commandé par phase et au cours d'une période de commande de l'interrupteur la première fraction sert entièrement à la charge de batterie de tension inférieure et la seconde fraction sert entièrement à la charge de la batterie de tension supérieure.

L'invention concerne ainsi un système d'alimentation en énergie électrique d'un véhicule automobile avec les caractéristiques techniques de la revendication 1.

Selon le système de l'invention, les moyens de commande sont tels que chaque interrupteur fonctionne à une fréquence sensiblement supérieure à la fréquence de fonctionnement de l'alternateur. Cette fréquence de commande de l'interrupteur commandé est par exemple de l'ordre de dix fois la fréquence de fonctionnement de l'alternateur.

Selon le système de l'invention, les moyens de commande sont tels que la fraction de chaque période de commande de l'interrupteur commandé au cours de laquelle celui-ci est fermé est fonction de la vitesse de rotation de l'alternateur.

Le système peut comporter un condensateur de filtrage entre la cathode du moyen à diode et la masse.

Le système peut comporter aussi un condensateur de filtrage entre une borne de l'interrupteur commandé et la masse.

Dans un mode d'exécution, la tension de la première batterie est de l'ordre de 12 V, la tension de la seconde batterie est de l'ordre de 36 V et la tension de l'alternateur est de l'ordre de 14 V.

En variante, la tension de la première batterie est de l'ordre de 12 V, la tension de la seconde batterie est de l'ordre de 36 V et la tension de l'alternateur est de l'ordre de 28 V.

L'alternateur est par exemple du type à griffes ou Lundell.

D'autres caractéristiques et avantages de l'invention apparaîtront avec la description de certains de ses modes de réalisation, cette description étant effectuée en se référant aux dessins ci-annexés sur lesquels :

les figures 1, 2, 3a, 3b et 3c, déjà décrites, représentent un montage connu et des diagrammes illustrant le fonctionnement de ce montage,
la figure 4 est un schéma d'un montage conforme à l'invention,
la figure 5 est un schéma correspondant à une phase du montage de la figure 4,
les figures 6a et 6b sont des diagrammes illustrant le fonctionnement du montage représenté sur les figures 4 et 5, et
la figure 7 représente une variante du schéma de la figure 4 pour une phase.

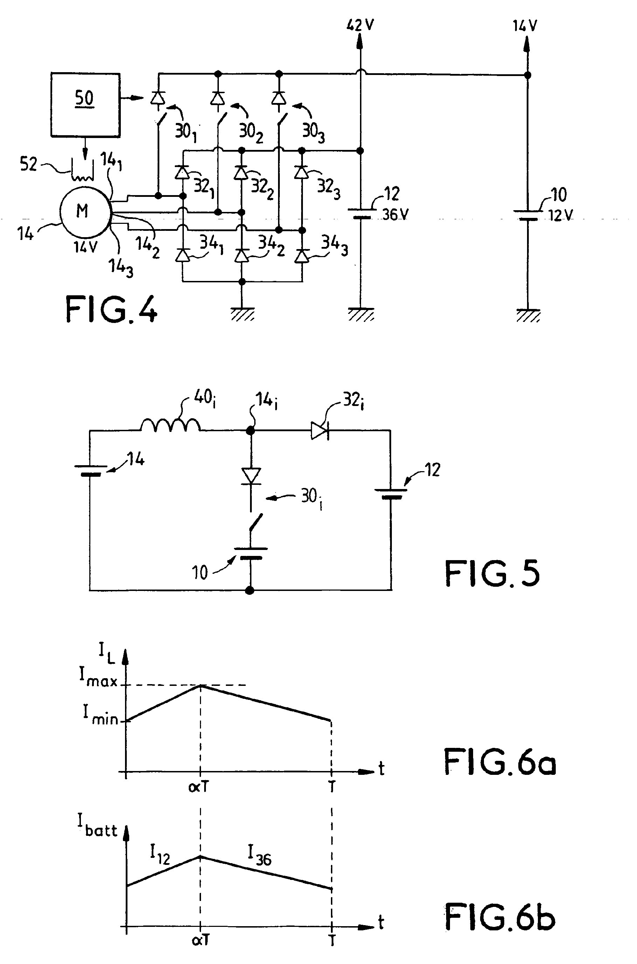

On se réfère tout d'abord à la figure 4 qui représente un montage dans lequel on prévoit, comme dans celui de la figure 1, un alternateur 14 de type Lundell, ou à griffes, destiné à charger une batterie 10 de 12 V et une batterie 12 de 36 V. Chaque borne de phase $14_1$, $14_2$ et $14_3$ de l'alternateur 14 est, comme dans le montage représenté dans la figure 1, relié au pôle positif de la batterie 10 de tension 12 V par l'intermédiaire d'un interrupteur indirectionnel commandé, respectivement $30_1$, $30_2$ et $30_3$.

Par ailleurs chaque borne $14_1$ de phase est reliée au pôle plus de la batterie 12 de tension 36 V par l'intermédiaire d'une diode, respectivement $32_1$, $32_2$ et $32_3$. Le sens de la liaison est tel que la cathode de chacune des diodes $32_i$ est connectée au pôle positif de la batterie 12. Par ailleurs, chaque borne de phase $14_i$ de l'alternateur est reliée à la masse par l'intermédiaire d'une autre diode $34_i$, de façon que l'anode de cette diode $34_i$ soit reliée à la masse tandis que sa cathode soit connectée à la borne $14_i$. Contrairement au montage représenté sur la figure 1 on ne prévoit pas d'interrupteur en parallèle sur chaque diode $34_i$.

Un boîtier de commande 50 fournit les signaux de commande des interrupteurs $30_1$, $30_2$ et $30_3$ et la tension nécessaire à l'enroulement 52 d'excitation du rotor de l'alternateur 14.

En variante, l'alternateur 14 délivre une tension de 28 V. Des alternateurs délivrant une tension de 28 V sont déjà fabriqués en série, notamment pour les véhicules lourds (camions) ou des véhicules militaires.

Le fonctionnement va maintenant être décrit à l'aide de la figure 5 et des diagrammes des figures 6a et 6b.

Sur la figure 5 on a représenté une phase de l'alternateur 14 en série avec une inductance $40_i$ dont une borne $14_i$ (qui constitue la borne de sortie de l'alternateur 14) est reliée, d'un côté, à l'anode de la diode $32_i$ et, de l'autre, à la borne positive de la batterie 10 de 12 V par l'intermédiaire de l'interrupteur commandé $30_i$.

L'interrupteur $30_i$ est commandé à une fréquence qui est environ dix fois la fréquence de fonctionnement de l'alternateur.

Chaque période de durée T de cette fréquence de commande est divisée en deux parties. Au cours de la première partie, de durée $\alpha T$ (figure 6a), l'interrupteur $30_i$ est fermé et l'intensité $I_L$ délivrée par l'inductance $40_i$ monte d'une première valeur $I_{min}$ à une seconde valeur $I_{max}$. Au cours de cette fraction $\alpha T$ de la période T la diode $32_i$ est bloquée car sa tension d'anode (12 V) est inférieure à sa tension de cathode (36 V). Dans ces conditions, seule la batterie 10 de 12 V peut être chargée. En même temps l'inductance $40_i$ se charge.

Après l'instant $\alpha T$ l'interrupteur $30_i$ est ouvert et la tension de l'inductance chargée s'ajoute à la tension fournie par l'alternateur proprement dit. Cette somme de tensions vaut 42 V ; elle permet la charge de la batterie 12 de 36 V. Ainsi l'inductance $40_i$ se décharge dans la batterie 12 au cours de la seconde fraction, de $\alpha T$ à T, de la période T.

La première période de 0 à $\alpha T$ est donc utilisée

pour la charge de la batterie de 12 V et la seconde période est utilisée pour la charge de la batterie 12 de 36 V par effet "boost".

Pour que le montage fonctionne il est nécessaire que la tension moyenne aux bornes de l'inductance $40_i$ soit nulle. Autrement dit, l'énergie accumulée lors de la charge de cette inductance de l'instant 0 à l'instant $\alpha T$ doit être égale à l'énergie restituée au cours de la décharge de l'inductance, de l'instant $\alpha T$ à l'instant T.

De cette condition on déduit la relation suivante entre la tension $E_1$ délivrée par l'alternateur 14, la tension $E_2$ délivrée par la batterie 10, la tension $E_3$ délivrée par la batterie 12 et le coefficient $\alpha$ :

$$(E_1 - E_2)\alpha = (E_3 - E_1)(1 - \alpha)$$

D'où :

$$\alpha = \frac{E_3 - E_1}{E_3 - E_2}$$

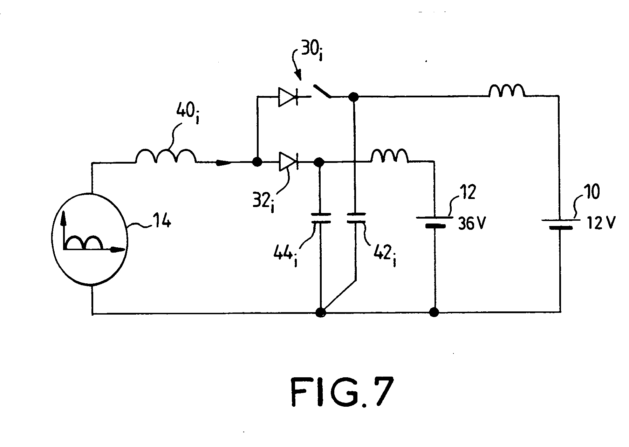

Dans le montage représenté sur la figure 7 on prévoit, pour filtrer les tensions fournies aux batteries 10 et 12, d'une part, un condensateur $42_i$ entre la borne de l'interrupteur $30_i$ qui est reliée au pôle positif de la batterie 10 et la masse et, d'autre part, un condensateur $44_i$ relié entre la cathode de la diode $32_i$ et la masse.

Une fréquence de découpage (de période T) de valeur élevée permet de minimiser les capacités des condensateurs $42_i$ et 44i. Cependant, cette fréquence de découpage ne devra pas être trop élevée pour que les pertes par commutation ne soient pas prohibitives.

Par ailleurs, il est préférable que les longueurs des divers fils de connexion soient faibles pour minimiser les pertes par commutation, c'est-à-dire les surtensions résultant des inductances parasites des fils. En particulier la distance entre le condensateur $44_i$ et la diode $32_i$ et la distance entre l'interrupteur $30_i$ et le condensateur $42_i$ sont de préférence faibles.

Il est à noter que les batteries 10 et 12 constituent elles-mêmes des condensateurs contribuant au filtrage. Mais cet effet de filtrage est atténué lorsque la diode $32_i$ et l'interrupteur $30_i$ sont éloignés des batteries. Ainsi, plus ces éléments $30_i$ et $32_i$ sont éloignés des batteries et plus il est nécessaire de prévoir des condensateurs de capacité importante.

Il est préférable de blinder les fils de sortie de l'alternateur 14 car ils subissent des variations rapides de tension et ils peuvent donc provoquer des parasites électromagnétiques.

Etant donné que le rapport cyclique $\alpha$ dépend de la tension fournie par l'alternateur 14, c'est-à-dire de sa force électromotrice $E_1$, et que cette force électromotrice $E_1$ dépend elle-même de la vitesse de rotation de l'alternateur (donc du moteur du véhicule), il est nécessaire de faire dépendre le coefficient α de cette vitesse.

La relation entre α et la vitesse de rotation peut être déterminée au préalable de façon expérimentale et, dans ce cas, on prévoit une table de correspondance en mémoire des moyens de commande du système.

Par ailleurs, la tension d'excitation du rotor de l'alternateur (fournie à l'enroulement 52) dépend aussi de la vitesse de rotation.

Bien que le système d'alimentation représenté sur la figure 4 ait principalement pour but d'alimenter deux batteries à l'aide d'un alternateur de force électromotrice supérieure à la plus petite des tensions de batterie et inférieure à la plus grande des tensions de batterie, on peut utiliser ce système d'alimentation en combinaison avec une seule batterie, par exemple une batterie de 12 V ou un batterie de 36 V.

Dans le cas de l'alimentation d'une batterie de 12 V, les interrupteurs $30_1$, $30_2$ et $30_3$ sont fermés en permanence et la régulation de la tension est obtenue par régulation de la tension d'excitation fournie à l'enroulement 52.

Dans le cas où le système est utilisé avec seulement une batterie de haute tension 36 V, les interrupteurs $30_1$, $30_2$ et $30_3$ sont ouverts en permanence et, dans ce cas également, la tension de sortie est régulée à l'aide de la tension aux bornes de l'enroulement 52.

Ce système d'alimentation peut également être utilisé non seulement pour alimenter les batteries mais aussi pour faire fonctionner l'alternateur 14 en moteur, par exemple pour le démarrage.

Dans ce cas, au lieu de diodes $32_1$, $32_2$, $32_3$, $34_1$, $34_2$ et $34_3$, on prévoit des interrupteurs de puissance. Si la batterie 12 de 36 V est utilisée pour alimenter un alternateur fonctionnant en moteur de tension nominale 24 V, ce moteur reçoit un courant d'intensité élevée et fournit donc un couple de valeur élevée. En outre, la plage de vitesses du moteur électrique 14 est plus étendue que dans le cas d'un alternateur de 14 V fonctionnant en moteur et alimenté par une batterie de 12 V.

Dans le cas où l'on prévoit des interrupteurs à la place des diodes $32_i$ et $34_i$, ces interrupteurs commandés pourront être utilisés pour protéger l'alternateur 14 contre des surtensions.

En effet, le moteur (alternateur) 14 étant alimenté par une tension supérieure à sa tension nominale, il peut se produire des surtensions gênantes. On prévoit donc par exemple un détecteur de telles surtensions fournissant un signal au calculateur 50 et ce dernier commande les interrupteurs pour court-circuiter les phases du moteur vers la masse en cas de telles surtensions

Par ailleurs, l'utilisation d'un alternateur de tension nominale inférieure à la tension la plus élevée, permet une bonne adaptation d'impédance de l'alternateur avec le réseau à tension élevée, ce qui assure un rendement élevé de l'ensemble formé par l'alternateur et les circuits de redressement et permet donc une puissance de sortie nominale importante.

**Revendications**

1. Système d'alimentation en énergie électrique d'un véhicule automobile comprenant un alternateur (14), une première batterie (10) de tension inférieure à la tension nominale de l'alternateur, une seconde batterie de tension sensiblement supérieure à la tension nominale de l'alternateur, et des moyens de commande adaptés à charger la première batterie lors de la charge de l'inductance interne de l'alternateur et que la seconde batterie soit chargée lors de la décharge de cette inductance interne, qui comprend, en combinaison :

   - pour chaque phase de l'alternateur un interrupteur commandé ($30_1$, $30_2$, $30_3$) en série avec la première batterie (10) de plus faible tension, et un moyen à diode ($32_1$, $32_2$ et $32_3$) pour charger la seconde batterie (12) de tension supérieure,
   - le circuit de charge de la seconde batterie (12) étant dépourvu d'interrupteur commandé, et
   - des moyens de commande (50) de chaque interrupteur commandé ($30_1$, $30_2$, $30_3$) adaptés à charger la première batterie (10) en même temps que l'inductance ($40_i$) de la phase correspondante de l'alternateur (14) lorsque chaque interrupteur commandé ($30_1$, $30_2$, $30_3$) est fermé; à décharger l'inductance dans la seconde batterie (12) lorsque l'interrupteur commandé est ouvert après la charge de l'inductance ($40_i$) et à commander chaque interrupteur ($30_1$, $30_2$, $30_3$) de façon périodique sur une période T divisée en une première partie de 0 à αT et en une deuxième partie de αT à T, l'interrupteur commandé ($30_1$, $30_2$, $30_3$) étant fermé sur la première partie et ouvert sur la deuxième partie.

2. Système selon la revendication 1, **caractérisé en ce que** l'inductance de chaque phase est telle que l'énergie accumulée lors de la charge de cet inductance lorsque l'inductance est fermé, est égale à l'énergie restituée au cours de la décharge de l'inductance lorsque l'interrupteur commandé est ouvert.

3. Système selon la revendication 2, **caractérisé en ce que** la durée αT de la première partie de période pendant laquelle l'interrupteur commandé est fermé a pour valeur :

$$\alpha = \frac{E_3 - E_1}{E_3 - E_2}$$

Formule dans laquelle $E_1$ est la tension délivrée par l'alternateur, $E_2$ est la tension délivrée par la batterie de plus faible tension et $E_3$ est la tension délivrée par la batterie de plus grande tension.

**4.** Système selon l'une des revendications 1 à 3, **caractérisé en ce que** les moyens de commande sont adaptés à faire fonctionner chaque interrupteur à une fréquence supérieure à la fréquence de fonctionnement de l'alternateur.

**5.** Système selon la revendication 4, **caractérisé en ce que** la fréquence de commande de l'interrupteur commandé est de l'ordre de dix fois la fréquence de fonctionnement de l'alternateur.

**6.** Système selon l'une des revendications précédentes, **caractérisé en ce que** les moyens de commande sont adaptés à commander chaque interrupteur de façon que la fraction ($\alpha$T) de chaque période de commande de l'interrupteur commandé au cours de laquelle celui-ci est fermé soit fonction de la vitesse de rotation de l'alternateur.

**7.** Système selon l'une des revendications précédentes, **caractérisé en ce qu'**il comporte un condensateur de filtrage ($44_i$) entre la cathode du moyen à diode ($32_i$) et la masse.

**8.** Système selon l'une des revendications précédentes, **caractérisé en ce qu'**il comporte un condensateur de filtrage ($42_i$) entre une borne de l'interrupteur commandé (30) et la masse.

**9.** Système selon l'une des revendications précédentes, **caractérisé en ce que** la tension de la première batterie (10) est de l'ordre de 12 V, la tension de la seconde batterie (12') est de l'ordre de 36 V et la tension de l'alternateur (14) est de l'ordre de 14 V.

**10.** Système selon l'une des 1 à 8, **caractérisé en ce que** la tension de la première batterie (10) est de l'ordre de 12 V, la tension de la seconde batterie (12') est de l'ordre de 36 V et la tension de l'alternateur est de l'ordre de 28 V.

**11.** Système selon l'une des revendications précédente, **caractérisé en ce que** l'alternateur est de type à griffes ou Lundell.

**Claims**

**1.** Electrical power supply system for an automobile vehicle comprising an alternator (14), a first battery (10) with a voltage less than the nominal voltage of the alternator, a second battery with a voltage substantially greater than the nominal voltage of the alternator, and control means suited to charge the first battery on the charge of the internal inductance of the alternator, wherein the second battery is charged on the discharge of this internal inductance, which comprises, in combination:

- for each phase of the alternator a controlled switch ($30_1$, $30_2$, $30_3$) in series with the first battery (10) of lower voltage, and a diode means ($32_1$, $32_2$ and $32_3$) to charge the second battery (12) of higher voltage,
- the charge circuit of the second battery (12) being without a controlled switch, and
- control means (50) of each controlled switch ($30_1$, $30_2$, $30_3$) suited to charge the first battery (10) at the same time as the inductance ($40_i$) of the corresponding phase of the alternator (14) to discharge the inductance in the second battery (12) when the controlled switch is open after the charge of the inductance ($40_i$) and to control each switch ($30_1$, $30_2$, $30_3$) periodically over a period T divided into a first part of 0 to $\alpha$T and into a second part of $\alpha$T to T, the controlled switch ($30_1$, $30_2$, $30_3$) being closed on the first par and open on the second part.

**2.** System according to Claim 1, **characterized in that** the inductance of each phase is such that the energy accumulated on the charge of this inductance when the inductance is closed is equal to the restored energy during the discharge of the inductance when the controlled switch is open.

**3.** System according to Claim 2, **characterized in that** the duration $\alpha$T of the first part of the period during which the controlled switch is closed has the value:

$$\alpha = \frac{E_3 - E_1}{E_3 - E_2}$$

in which formula $E_1$ is the voltage delivered by the alternator, $E_2$ is the voltage delivered by the battery of lower voltage and $E_3$ is the voltage delivered by the battery of higher voltage.

**4.** System according to one of Claims 1 to 3, **characterized in that** the control means are suited to cause each switch to function at a higher frequency than the functioning frequency of the alternator.

**5.** System according to Claim 4, **characterized in that** the control frequency of the controlled switch is in the order of ten times the functioning frequency of the alternator.

**6.** System according to one of the preceding claims, **characterized in that** the control means are suited to control each switch such that the fraction ($\alpha$T) of each control period of the controlled switch during which the latter is closed is a function of the speed of rotation of the alternator.

7. System according to one of the preceding claims, **characterized in that** it comprises a filter capacitor ($44_i$) between the cathode of the diode means and the ground.

8. System according to one of the preceding claims, **characterized in that** it comprises a filter capacitor ($42_i$) between a terminal of the controlled switch (30) and the ground.

9. System according to one of the preceding claims, **characterized in that** the voltage of the first battery (10) is in the order of 12 V, the voltage of the second battery (12') is in the order of 36 V and the voltage of the alternator (14) is in the order of 14 V.

10. System according to one of Claims 1 to 8, **characterized in that** the voltage of the first battery (10) is in the order of 12 V, the voltage of the second battery (12') is in the order of 36 V and the voltage of the alternator is in the order to 28 V.

11. System according to one of the preceding claims, **characterized in that** the alternator is of the claw or Lundell type.


**Patentansprüche**

1. System zum Versorgen eines Kraftfahrzeugs mit elektrischer Energie, das einen Wechselstromgenerator (14), eine erste Batterie (10) mit einer Spannung, die niedriger ist als die Nennspannung des Wechselstromgenerators, eine zweite Batterie mit einer Spannung, die deutlich höher ist als die Nennspannung des Wechselstromgenerators, aufweist, und Mittel zum Steuern, die die erste Batterie beim Laden der internen Selbstinduktionsspule des Wechselstromgenerators aufladen können, wobei die zweite Batterie beim Entladen dieser internen Selbstinduktionsspule geladen wird, das kombiniert Folgendes aufweist:

- für jede Phase des Wechselstromgenerators einen Schalter ($30_1$, $30_2$, $30_3$), der in Serie mit der ersten Batterie (10) mit niedrigerer Spannung gesteuert wird, und ein Mittel mit einer Diode ($32_1$, $32_2$ und $32_3$, um die zweite Batterie (12) mit höherer Spannung zu laden,
- wobei der Ladeschaltkreis der zweiten Batterie (12) keinen gesteuerten Schalter aufweist, und
- Mittel (50) zum Steuern jedes gesteuerten Schalters ($30_1$, $30_2$, $30_3$), die die erste Batterie (10) gleichzeitig mit der Selbstinduktionsspule ($40_i$) der entsprechenden Phase des Wechselstromgenerators (14) aufladen können, wenn jeder gesteuerte Schalter ($30_1$, $30_2$, $30_3$ geschlossen ist, und die Selbstinduktionsspule in die zweite Batterie (12) entladen können, wenn der gesteuerte Schalter nach dem Laden der Selbstinduktionsspule ($40_i$) offen ist, und jeden Schalter ($30_1$, $30_2$, $30_3$) derart periodisch über eine Zeitspanne T, die in einen ersten Teil von 0 bis $\alpha$T und einen zweiten Teil von $\alpha$T bis T unterteilt ist, steuern können, wobei der gesteuerte Schalter ($30_1$, $30_2$, $30_3$) auf dem ersten Teil geschlossen und auf dem zweiten Teil offen ist.

2. System nach Anspruch 1, **dadurch gekennzeichnet, dass** die Selbstinduktionsspule jeder Phase derart ist, dass die beim Laden dieser Selbstinduktionsspule angesammelte Energie, wenn die Selbstinduktionsspule geschlossen ist, gleich der Energie ist, die im Laufe des Entladens der Selbstinduktionsspule, wenn der gesteuerte Schalter offen ist, wiedergegeben wird.

3. System nach Anspruch 2, **dadurch gekennzeichnet, dass** die Dauer $\alpha$T des ersten Teils der Zeitspanne, während der der gesteuerte Schalter geschlossen ist, den folgenden Wert hat:

$$\alpha = \frac{E_3 - E_1}{E_3 - E_2}$$

wobei in dieser Formel $E_1$ die Spannung ist, die von dem Wechselstromgenerator abgegeben wird, $E_2$ die Spannung ist, die von der Batterie mit der schwächeren Spannung abgegeben wird, und $E_3$ die Spannung ist, die von der Batterie mit der höheren Spannung abgegeben wird.

4. System nach einem der Ansprüche 1 bis 3, **dadurch gekennzeichnet, dass** die Steuermittel jeden Schalter mit einer Frequenz funktionieren lassen können, die größer ist als die Betriebsfrequenz des Wechselstromgenerators.

5. System nach Anspruch 4, **dadurch gekennzeichnet, dass** die Steuerfrequenz des gesteuerten Schalters in der Größenordnung von zehn Mal der Betriebsfrequenz des Wechselstromgenerators ist.

6. System nach einem der vorhergehenden Ansprüche, **dadurch gekennzeichnet, dass** das die Steuermittel jeden Schalter derart steuern können, dass der Bruchteil ($\alpha$T) jeder Steuerperiode des gesteuerten Schalters, während der dieser geschlossen ist, von der Drehzahl des Wechselstromgenerators abhängt.

7.  System nach einem der vorhergehenden Ansprüche, **dadurch gekennzeichnet, dass** es einen Filterkondensator ($44_i$) zwischen der Kathode des Mittels mit Diode ($32_i$) und der Masse aufweist.

8.  System nach einem der vorhergehenden Ansprüche, **dadurch gekennzeichnet, dass** es einen Filterkondensator ($42_i$) zwischen einer Klemme des gesteuerten Schalters (30) und der Masse aufweist.

9.  System nach einem der vorhergehenden Ansprüche, **dadurch gekennzeichnet, dass** die Spannung der ersten Batterie (10) in der Größenordnung von 12 V liegt, die Spannung der zweiten Batterie (12') in der Größenordnung von 36 V liegt, und die Spannung des Wechselstromgenerators (14) in der Größenordnung von 14 V liegt.

10.  System nach einem der Ansprüche 1 bis 8, **dadurch gekennzeichnet, dass** die Spannung der ersten Batterie (10) in der Größenordnung von 12 V, die Spannung der zweiten Batterie (12') in der Größenordnung von 36 V und die Spannung des Wechselstromgenerators in der Größenordnung von 28 V liegt.

11.  System nach einem der vorhergehenden Ansprüche, **dadurch gekennzeichnet, dass** der Wechselstromgenerator des Typs Klauengenerator oder des Typs Lundell ist.

FIG.1

FIG.2

FIG.3a

FIG.3b

FIG.3c

FIG.4

FIG.5

FIG.6a

FIG.6b

FIG.7

## EP 1 331 716 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6239996 B

- WO 0013303 A